(19) Europäisches Patentamt
European Patent Office
Office européen des brevets

(11) Publication number: 0 108 772 B1

(12) EUROPEAN PATENT SPECIFICATION

(45) Date of publication of patent specification: 28.01.87

(51) Int. Cl.$^4$: C 08 K 3/34, C 08 L 27/18, C 09 D 3/78

(21) Application number: 83901560.9

(22) Date of filing: 18.04.83

(86) International application number: PCT/US83/00553

(87) International publication number: WO 83/04035 24.11.83 Gazette 83/27

# (54) POLYTETRAFLUORETHYLENE RESIN WITH DEGRADATION RETARDER.

(30) Priority: 20.05.82 US 380353

(43) Date of publication of application: 23.05.84 Bulletin 84/21

(45) Publication of the grant of the patent: 28.01.87 Bulletin 87/05

(84) Designated Contracting States: BE DE FR GB NL SE

(56) References cited:
GB-A-2 067 575
US-A-4 147 683
US-A-4 371 656

**The file contains technical information submitted after the application was filed and not included in this specification**

(73) Proprietor: E.I. DU PONT DE NEMOURS AND COMPANY
1007 Market Street
Wilmington Delaware 19898 (US)

(72) Inventor: CONCANNON, Thomas Patrick
117 Ridgefield Road
Newton Square, PA 19073 (US)
Inventor: RUMMEL, Mitzie Kristine
151 Bishop Avenue M309
Secane, PA 19018 (US)

(74) Representative: Abitz, Walter, Dr.-Ing. et al
Abitz, Morf, Gritschneder, Freiherr von Wittgenstein Postfach 86 01 09
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 108 772 B1

## Description

Background

This invention relates to compositions containing polytetrafluoroethylene (PTFE) resins and zeolites as degradation retarders.

Various materials have been found to be useful in retarding the degradation of many polymer systems upon exposure to elevated temperatures or to radiation, particularly ultra-violet light. Often oxygen from the air enhances degradation.

Organo-sulfur compounds and various organometallic compounds and hindered amines are used to retard degradation of polymers meant to be used at ordinary temperatures such as 0—100°C by stabilizing the polymer against the effects of ultraviolet light. At higher application temperatures, rubber, plastics, and such hydrogen-containing halogenated hydrocarbon resins as polyvinyl chloride (PVC), polyvinyl fluoride (PVF) and polyvinylidene fluoride ($PVF_2$) have been protected from degradation by the use of various types of zeolites. Some patent references say it is important to use zeolites which have been activated by driving off more or less of the contained water of hydration; others say they should be unactivated. Some say the zeolites should be ion-exchanged with monovalent metals such as sodium; others say divalent metals such as calcium are necessary. Some say at least minimum ion exchange capacity is important; some use two types of zeolites with different pore size and water content; and still others also require additional retarders to work in conjunction with the zeolites.

However, the patents and publications described above deal with hydrogen-containing resins and not with perfluorocarbon resins such PTFE. Partially because of the lack of hydrogen, perfluorocarbon resins such as PTFE can be used continuously at much higher temperatures than $PVF_2$ without substantial loss of function, perhaps 260°C for PTFE, versus 150°C for $PVF_2$ and PVF, and 80—120°C for PVC. While the mechanisms of oxidative and thermal degradation of perfluorocarbon resins may not be completely understood, they do not include to a substantial extent one of the primary mechanisms in PVC, PVF and $PVF_2$, dehydrohalogenation, since the perfluorocarbon resins do not include hydrogen in the polymer.

The predominant mechanisms of degradation in PTFE resins may include formation of peroxides and chain-cission, leading to lower molecular weight species. Even perfluorocarbon resins tend to have functional end groups such as carboxylic acid groups. These can complicate any study of the degradation mechanisms, especially where the molecular weight of the resin decreases during the degradative process. Considering the higher temperature capabilities of PTFE compared to $PVF_2$, one cannot forecast what will happen with the perfluorocarbon resins from what has been tried with $PVF_2$, especially when applying the perfluorocarbon resins to uses at temperatures higher than the highest at which $PVF_2$ can be used.

Melt processible fluorine-containing resins, including polymers of tetrafluoroethylene such as with hexafluoropropylene (HFP), knwon as FEP, and also chlorotrifluoroethylene (CTFE) and PVF, but not including polytetrafluoroethylene homopolymer itself, are the subject of U.S. Patent 4,248,763 — Yoshimura, et al (February 3, 1981). That patent uses a combination of an amine antioxidant, an organosufurous compound, and at least one of carbon black and iron, nickel or cobalt to obtain improved thermal stability in the melt processible fluorine-containing resin. Although some of these resins are perfluorcarbon resins, others coontain hydrogen. Such rapidly consumed additives would, of course, not remain available for prolonged effectiveness at elevated temperatures.

Coating compositions containing PTFE in formulations suitable for industrial and cookware applications, are known in several U.S. patents, including:

4,252,859 — Concannon and Vary (February 24, 1981);
4,123,401 — Berghmans et al (October 31, 1978);
4,143,204 — Fang (March 6, 1979);
4,145,325 — Vassiliou, et al (March 20, 1979);
4,147,683 — Vassiliou, et al (April 3, 1979);
4,150,008 — Vassiliou, et al (April 17, 1979);
4,169,083 — Vassiliou (September 25, 1979);
4,180,609 — Vassiliou (December 25, 1979); and
4,311,634 — Vassiliou (January 19, 1982).

Zeolites are reversibly hydrated aluminium silicates generally containing alkali or alkaline earth metal oxides which sometimes can be ion exchanged for other metals or for hydrogen. A general structural definition is

$$M_{x/n}[(AlO_2)_x(SiO_2)_y]\cdot mH_2O$$

wherein M is a cation of valence n, and n is 1 or 2. The ratio of x to y can vary from 1 to a large number, as is known in the art. Zeolites have a framework structure often permitting their use as molecular sieves after removing the water which can leave a void volume (depending on the value of m) of up to 50% with a narrowly defined pore size on the order of a few microns. Zeolites include many naturally occurring minerals and synthetic materials. The class of minerals known as feldspathoids is closely related to zeolites and is sometimes included in the meaning of the term zeolite. Reversibly hydrated feldspathoids, including sodalite and ultramarine, are included herein in the term zeolite. They are more open in structure with larger cavities than feldspars, which are anhydrous. Reversibly hydrated feldspathoids are more closely related to other zeolites than to feldspars. There are hydrated sodium aluminum silicates which are not zeolites and are not within the present invention, such as montmorillonite, sodium bentonite, saponite, and various clays.

Summary of the Invention

The present invention provides compositions, including coating compositions, of PTFE resins and zeolites which act as degradation retarders at

elevated temperatures. Ultramarine blue contains sulfur species trapped in a cage structure from which it can be released gradually over an extended period of time (time release). Ultramarine blue is a preferred zeolite. Other zeolites containing sulfur or phosphorus, or even selenium or tellurium, in a crystallographic structure permitting similar time release may also be particularly desirable. Compositions of the invention include PTFE resins which give a melt viscosity at 380°C of at least $10^5$ Pa·s.

The coating compositions preferably include unsaturated hydrocarbon polymer, such as an acrylic resin, which decomposes at elevated temperatures to enhance the coalescene of the perfluorocarbon resin into the form of a film. These coating compositions also generally include a pigment, mica, a pigment-coated mica, or metal flake. The mica can give a sparkling appearance and tend to mask penetrating stains. When the pigment used as such or as a coating on the mica is an iron-containing pigment, to obtain certain colors or for any other reason, the iron content sometimes tends to enhance degradation of the PTFE resin at elevated temperatures. The cause is not known with certainty, but there may be some catalytic effect taking place with the iron oxide catalyzing the formation of peroxides which lead to degradation of the PTFE resin. Also, it appears that ultramarine blue may change the catalytic activity of the iron oxide.

Detailed Disclosure of the Preferred Embodiments

The degradation of polytetrafluorethylene at elevated temperatures in air is difficult to monitor. Because the inherent elevated temperature capabilities of PTFE are so good, there seems to have been less effort directed toward further improving the elevated temperature capabilities for them than for other lower temperature polymers such a PVC and $PVF_2$. However, above certain temperatures PTFE resins are not useful, and they do very slowly degrade even at certain high temperatures at which they are normally used.

We have found that iron oxide pigments sometimes have a tendency to accelerate the degradation of PTFE at elevated temperatures, and we have found that ultramarine blue and other zeolites provided as particulate pigments tend to counteract that tendency and act as degradation retarders at elevated temperatures even in the absence of iron oxide.

As is known in the art, small amounts of zinc, such as 0.05% by weight of the coating in the form of zinc octoate or zinc oxide, can be added to the ultramarine blue to aid in fixing the sulfur-containing effluents ($H_2S$, etc.) or in slowing down their rate of effluence when desired.

Limited data from in-home use tests of aluminum frypans with commercial PTFE multilayer coatings over periods of 6 and 12 months, substituting ultramarine blue for cobalt blue pigment, showed superior scratch resistance and blistering resistance for the coating with the ultramarine blue. Stain resistance was slightly superior for ultramarine blue at 6 months and less superior for cobalt blue at 12 months. Such tests are empirical and do not elucidate the mechanisms of degradation, but they do show that ultramarine blue does give a longer useful life in at least some ways to PTFE coatings. This is evidently due to retarding degradation of the coatings in some way. It has also been found in primers for multilayer PTFE coatings that ultramarine blue gave less oxidative degradation than cobalt blue, as indicated by haziness and bloom or localized deterioration of surface appearance.

Various tests with PTFE show that iron sometimes seems to tests with PTFE show that iron sometimes seems to enhance and sometimes to retard degradation of PTFE. However, ultramarine blue appears always to retard degradation of PTFE, whether iron is present or not. Therefore, the present invention contemplates the use of ultramarine blue or other zeolites with PTFE resins, whether iron is present or not.

Attempts to use thermogravimetric analysis (TGA) to follow the effects of various additives in retarding degradation of PTFE were unsuccessful. It is difficult to determine optimum specimen size and geometry. TGA data integrate weight gain and weight loss phenomena and do not tell just what is happening with time at elevated temperature.

**Claims**

1. A composition consisting essentially of fluoropolymer resin and zeolite characterized in that the fluoropolymer is a polytetrafluoroethylene resin, the composition has a melt viscosity at 380°C of at least $10^5$ Pa·s ($10^6$ poises), and the zeolite contains sulfur, phosphorus, selenium or tellurium in a crystallographic configuration which permits gradual release of the sulfur, phosphorus, selenium or tellurium.

2. The composition of claim 1 in which the zeolite is ultramarine blue.

3. A coating composition comprising the composition of claim 1.

4. The coating composition of claim 3 also containing an unsaturated hydrocarbon polymer which decomposes at elevated temperatures but below the melting point of the polytetrafluoroethylene and in which the unsaturated hydrocarbon polymer acts as a coalescing aid to enhance film formation by the polytetrafluoroethylene.

5. The coating composition of claim 4 in which the unsaturated hydrocarbon polymer is an acrylic polymer and which also contains an oxidation catalyst to aid in decomposing the acrylic polymer.

6. The coating composition of claim 5 which also contains at least one of pigment, mica, pigment-coated mica, and metal flake.

7. The coating composition of claim 6 in which

the pigment includes an iron oxide.

8. The coating composition of claim 7 in which the zeolite is ultramarine blue.

**Patentansprüche**

1. Zusammensetsung, bestehend im wesentlichen aus Fluorpolymer-Harz und Zeolith, dadurch gekennzeichnet, daß das Fluorpolymere ein Polytetrafluorethylen-Harz ist, die Zusammensetzung eine Schmelzviskosität bei 380°C von wenigstens $10^5$Pa·s ($10^6$ poises) hat und der Zeolith Schwefel Phosphor, Selen oder Tellur in einer kristallographischen Konfiguration enthält, die eine schrittweise Freisetzung des Schwefels, Phosphors, Selens oder Tellurs erlaubt.

2. Zusammensetzung nach Anspruch 1, in welcher der Zeolith Ultramarin-Baul ist.

3. Überzugszusammensetzung, umfassend die Zusammensetzung nach Anspruch 1.

4. Überzugszusammensetzung nach Anspruch 3, die zusätzlich ein ungesättigtes Kohlenwasserstoffpolymers enthält, das bei erhöhten Temperaturen, jedoch unterhalb des Schemlzpunktes des Polytetrafluorethylens zersetzt wird, und in welcher das ungesättigte Kolenwasserstoffpolymere als Koaleszierhilfe wirkt, um die Filmbildung durch das Polytetrafluorethylene zu begünstigen.

5. Überzugszusammensetzung nach Anspruch 4, in welcher das ungesättigte Kohlenwasserstoffpolymere ein Acrylpolymeres ist, und die zusätzlich einen Oxidationskatalysator enthält, um die Zersetzung des Acrylpolymeren zu unterstützen.

6. Überzugszusammensetzung nach Anspruch 5, welche zusätzlich wenigstens einen Stoff aus der Gruppe Pigment, Glimmer, mit Pigment beschichteter Glimmer und Metallplättchen enthält.

7. Überzugszusammensetzung nach Anspruch 6, in welcher das Pigment ein Eisenoxid umfaßt.

8. Überzugszusammensetzung nach Anspruch 7, in welcher der Zeolith Ultramarin-Blau ist.

**Revendications**

1. Une composition formée essentiellement de résine de polymère fluoré et de zéolithe, caractérisée en ce que le polymère fluoré est une résine de polytétrafluoréthylène, la composition présente une viscosité à l'état fondu à 380°C d'au moins $10^5$ Pa·s ($10^6$ poises), et la zéolithe contient du soufre, du phosphore, du sélénium ou du tellure dans une configuration cristallographique qui permet une libération graduelle du soufre, du phosphore, du sélénium ou du tellure.

2. La composition de la revendication 1, dans laquelle la zéolithe est du bleu d'outremer.

3. Une composition de revétement qui comprend la composition de la revendication 1.

4. La composition de revêtement de la revendication 3, qui contient en outre un polymère d'hydrocarbure insaturé qui se décompose à des températures élevées mais inférieures au point de fusion du polytétrafluoréthylène et dans laquelle le polymère d'hydrocarbure insaturé agit comme un adjuvant de coalescence pour favoriser la formation de pellicule par le polytétrafluoréthylène.

5. La composition de revêtement de la revendication 4, dans laquelle le polymère d'hydrocarbure insaturé est un polymère acrylique et qui contient aussi un catalyseur d'oxydation destiné à favoriser la décomposition du polymère acrylique.

6. La composition de revêtement de la revendication 5, qui contient aussi au moins l'un des produits suivants: pigment, mica, mica revêtu de pigment, et paillettes métalliques.

7. La composition de revêtement de la revendication 6, dans laquelle le pigment comprend un oxyde de fer.

8. La composition de revêtement de la revendication 7, dans laquelle la zéolithe est du bleu d'outremer.